# EUROPÄISCHE PATENTSCHRIFT

(11) **EP 2 931 596 B1**
(45) Veröffentlichungstag und Bekanntmachung des Hinweises auf die Patenterteilung: **22.02.2017**
(21) Anmeldenummer: 13805837.5
(22) Anmeldetag: 10.12.2013
(51) Int. Cl.: B63B 35/44

(54) **IN DER OFFENEN SEE SCHWIMMENDES UND ÜBER ABSPANNMITTEL MIT ANKERN VERBUNDENES TRAGWERK FÜR WINDKRAFTANLAGEN, SERVICESTATIONEN ODER KONVERTERSTATIONEN**
LOAD-BEARING STRUCTURE THAT FLOATS IN THE OPEN SEA AND IS CONNECTED TO ANCHORS VIA TENSION MEANS, FOR WIND POWER PLANTS, SERVICE STATIONS OR CONVERTER STATIONS
STRUCTURE DE SUPPORT FLOTTANTE EN MER, RELIÉE À DES ÉLÉMENTS D'ANCRAGE PAR L'INTERMÉDIAIRE DE MOYENS DE HAUBANAGE ET DESTINÉE À DES ÉOLIENNES, DES STATIONS DE SERVICE OU DES STATIONS DE CONVERTISSEUR

(30) Priorität: 11.12.2012 DE 102012222756
(43) Veröffentlichungstag der Anmeldung: 21.10.2015
(73) Patentinhaber: GICON windpower IP GmbH, 01219 Dresden (DE)
(72) Erfinder: Großmann, Jochen, 01187 Dresden (DE); Dahlhaus, Frank, 76351 Linkenheim-Hohenstetten (DE)
(74) Vertreter: Kailuweit & Uhlemann Patentanwälte Partnerschaft mbB
(86) Internationale Anmeldenummer: PCT/EP2013/076062
(87) Internationale Veröffentlichungsnummer: WO 2014/090791

(56) Entgegenhaltungen:
- GB-A- 2 141 076
- US-A- 4 170 266
- US-A1- 2003 140 838

## Beschreibung

Die Erfindung betrifft in der offenen See schwimmende und über Abspannmittel mit Ankern verbundene Tragwerke für Windkraftanlagen, Servicestationen oder Konverterstationen.

Schwimmende Auftriebskörper in Verbindung mit Ankern für Windkraftanlagen in der offenen See ist beispielsweise durch die Druckschrift GB 2 378 679 A bekannt. Das dazu realisierte Schwimmfundament besteht aus mehreren Auftriebskörpern, die über radiale Stahlstreben mit dem Turm der Windkraftanlage verbunden sind. Die Stahlstreben sind in Draufsicht kreuzförmig angeordnet und untereinander nicht verbunden. Treten an den radialen Stahlstreben des Bauwerks Biegekräfte auf, führen diese zu hohen Biegemomenten.

Durch die Druckschrift WO 2007/096680 A1 ist ein viereckiges Schwimmfundament bekannt, wobei die an den Ecken angeordneten Schwimmkörper untereinander durch Zugstäbe und Druckstäbe zu einem räumlichen Tragwerk verbunden sind. Ein zentraler großer Schwimmkörper trägt einen Turm, der über Schrägseile zu den außen liegenden Schwimmkörpern hin abgespannt ist. Diese Lösung erfordert einen nicht unerheblichen hohen Bauaufwand.

Die Druckschrift US 7,156,586 B2 beschreibt ein Schwimmtragwerk, das radial von einem Mast weg strebende Arme aufweist. Diese sind an ihren Enden mit Schwimmkörpern versehen. Zur Stabilisierung der Mastposition sind zwischen den Schwimmkörpern und dem Mast Schrägseile gespannt. An dem zentralen Mastfuß ergeben sich Spannungskonzentrationen, die zu Schwierigkeiten führen können, mindestens aber den Bauaufwand erhöhen.

Die Druckschrift EP 1 288 122 A2 offenbart ein Schwimmtragwerk in Gestalt einer massiven Schwimmplattform mit mehreren Kammern, die nach Art einer Taucherglocke mit Luft gefüllt und somit zur Erzeugung von Auftrieb herangezogen werden können. Die Errichtung eines solchen Schwimmfundaments ist mit einem hohen Materialaufwand verbunden.

Die Druckschriften EP 1 876 093 A3 und DE 10 2008 003 647 A1 beinhalten Schwimmtragwerke, bei denen sich Schwimmkörper an radial von einer Zentralkonstruktion weg erstreckenden Enden vorgesehen sind.

Durch die Druckschrift WO 2011/057 940 A2 ist eine Offshore-Windkraftanlage bekannt. Diese besitzt einen Schwimmkörper, der über Verbindungselemente mit dem Turm der Windkraftanlage verbunden ist. Darüber hinaus weist die Offshore-Windkraftanlage ein Gegengewicht am Turmende auf. Die Verbindungselemente sind dabei gleichmäßig um den Turm in mehreren Gruppen angeordnet. Eine untere Gruppe trägt im Wesentlichen den Turm und zwei obere Gruppen stützen und positionieren den Turm. Die oberen Gruppen greifen an übereinander liegenden Stellen des Turmes an. Durch die gleichmäßige Verteilung der Verbindungselemente kann sich der Turm gegenüber dem Schwimmkörper drehen. Damit ändert sich die Position des Turmes gegenüber dem Schwimmkörper. Gleichzeitig treten in den Verbindungselementen durch die unterschiedlichen Winkel der Verbindungselemente gegenüber dem Turm verschiedene Kräfte auf. Eine gleichmäßige Kraftverteilung ist nicht mehr gegeben.

Die Druckschrift US 2005/0 206 168 A1 beinhaltet eine Tragkonstruktion für Offshore-Windkraftanlagen, wobei der Turm der Windkraftanlage über eine Gitterstruktur mit Schwimmkörpern verbunden ist. Hauptelemente sind dabei Streben, die gleichmäßig um den den Turm verteilt sind. Eine Drehbewegung des Turmes gegenüber der Tragkonstruktion ist nicht ausgeschlossen.

Die Druckschrift WO 2004/055 272 A2 zeigt eine Offshore-Windkraftanlage mit der Möglichkeit der Schaffung einer nutzbaren Meereskultur. Der Turm der Windkraftanlage wird dabei über gleichmäßig am Turm befestigte und um diesen verteilte Elemente in einem Schwimmkörper gehalten. Dabei ist wiederum eine Drehbewegung des Turmes gegenüber dem Schwimmkörper nicht ausgeschlossen.

Durch die Druckschrift GB 2 141 076 A ist ein in der offenen See schwimmendes Tragwerk bekannt. Auftriebskörper des Tragwerks sind an den Eckpunkten eines Polygons angeordnet. Diese sind gleichzeitig die Träger für ein Traggerüst. Die Auftriebskörper sind mit weiteren als Ausleger ausgebildeten Auftriebskörpern verbunden. Die Auftriebskörper durchschneiden die Wasseroberfläche, so dass ein halb tauchendes Tragwerk vorhanden ist. Bei hohen Wellen der Wasseroberfläche sind Schwankungen des Traggerüsts nicht auszuschließen.

Die Druckschrift US 4 170 266 A beinhaltet ein Verfahren und eine Vorrichtung für Offshore-Bohrungen, insbesondere zum Bohren in großen Tiefen. Unter Wasser angeordnete Auftriebskörper sind in den Eckpunkten eines Polygons angeordnet.

Der im Patentanspruch 1 angegebenen Erfindung liegt die Aufgabe zugrunde, ein in der offenen See schwimmfähiges Tragwerk zur sicheren und stabilen Verankerung eines Bauwerks als Windkraftanlage, Servicestation oder Konverterstation zu schaffen.

Diese Aufgabe wird mit den im Patentanspruch 1 aufgeführten Merkmalen gelöst.

Die in der offenen See schwimmenden und über Abspannmittel mit Ankern verbundenen Tragwerke für Windkraftanlagen, Servicestationen oder Konverterstationen zeichnen sich insbesondere durch ihre sichere und stabile Verankerung aus.

Dazu weist das Tragwerk ein Unterwassertragwerk und ein Traggerüst für die Windkraftanlage oder die Bauwerke für die Servicestationen oder die Konverterstationen auf. Das Unterwassertragwerk besitzt
- erste an den Eckpunkten eines Polygons angeordnete und über jeweils wenigstens einen ersten Abstandskörper miteinander verbundene sowie als Träger für ein Traggerüst dienende Auftriebskörpern als Kerntragwerk und
- zweite als Ausleger der ersten Auftriebskörper angeordnete Auftriebskörper,
wobei jeder der zweiten Auftriebskörper mit seinen beiden benachbarten ersten Auftriebskörpern über wenigstens einen zweiten Abstandskörper verbunden ist.

Die ersten Auftriebskörper sind in den Eckpunkten eines Polygons angeordnet und über jeweils wenigstens einen ersten Abstandskörper miteinander verbunden.

Das Tragwerk stellt damit ein räumliches Tragwerk in Form eines Raumtragwerks dar.

Zum Einen können die ersten Auftriebskörper und die ersten Abstandskörper als eine erste Teilbaugruppe als Kerntragwerk leicht montiert, zum Standort transportiert und dort platziert werden. Dabei ist der Umfang vorteilhafterweise auf die Maße des Polygons begrenzt, so dass die Montage und der Transport minimierbar ist. Die zweiten Auftriebskörper sind Ausleger der ersten Auftriebskörper, die jeweils mittels zweiter Abstandskörper mit den ersten Auftriebskörpern verbunden sind. Dabei kann jeder der zweiten Auftriebskörper mit den zweiten Abstandkörpern eine zweite Teilbaugruppe sein. Der Transport ist auf diese Teilbaugruppen beschränkt. Am Standort können die erste Teilbaugruppe und die zweiten Teilbaugruppen leicht zu einer das Unterwassertragwerk darstellenden Baugruppe zusammengefügt werden. Damit sind die Teilbaugruppen leicht und ökonomisch günstig zum Standort transportierbar und dort als Baugruppe einfach montierbar, so dass eine ökonomische Realisierung gegeben ist.

Zum Anderen können die erste Teilbaugruppe und die zweiten Teilbaugruppen auch zusammengefügt als Baugruppe und damit als Unterwassertragwerk mit entsprechenden Mitteln zum Standort transportiert werden. Günstigerweise begrenzen die zweiten Auftriebskörper wiederum ein Polygon, dessen Form gleich dem durch die ersten Auftriebskörper begrenzten Polygons ist. Damit ist ein eng begrenzter Flächenbedarf des Unterwassertragwerks vorhanden, wobei im Wesentlichen die Positionen der ersten Auftriebskörper die Maße des Unterwassertragwerks bestimmen.

Ein weiterer Vorteil besteht darin, dass dadurch überkreuzende Konstruktionen zwischen den einzelnen Auftriebskörpern vermieden werden. Die Auftriebskörper sind dabei auch in einer Ebene anordenbar, so dass das Unterwassertragwerk leicht auf einer ebenen Standfläche montierbar ist. Dazu kann ein entsprechend ausgebildetes Schiff, ein Ponton, eine Freiluftmontagefläche oder eine Montagefläche einer Werkhalle genutzt werden.

Die ersten Auftriebskörper sind günstigerweise gleichzeitig die Träger des Traggerüsts für die Windkraftanlage oder die Gegenstände für die Servicestation oder die Konverterstation. Der Aufbau vereinfacht sich wesentlich, wobei das Unterwassertragwerk und das Traggerüst getrennt voneinander realisier- und transportierbar und vor Ort auf See miteinander zum Tragwerk montierbar sind.

Zur Verbindung der ersten Auftriebskörper untereinander und zur Verbindung der ersten Auftriebskörper mit den zweiten Auftriebskörpern sind jeweils mindestens zwei stabförmige Abstandskörper beabstandet zueinander angeordnet, die weiterhin über wenigstens eine Strebe miteinander verbunden sind. Das stellt eine einfache und ökonomische Realisierung dar und sichert eine stabile Verbindung der Auftriebskörper. Die Stabilität kann durch zwei diagonal angeordnete Streben weiter erhöht werden. Stabförmige Abstandskörper und Streben bilden zusammen einen K-Verband.

Die Endenbereiche der stabförmigen Abstandskörper befinden sich im Auftriebskörper. Weiterhin sind die stabförmigen Abstandskörper über einen Tragstab im Auftriebskörper miteinander verbunden, so dass das Unterwassertragwerk ein Stabtragwerk mit den Auftriebskörpern ist. Darüber hinaus befinden sich die Knotenpunkte sowohl zwischen stabförmigen Abstandskörper und Tragstab als auch zwischen stabförmigen Abstandskörpern und Strebe im Auftriebskörper.

Das Traggerüst ist vorteilhafterweise ein Stabtraggerüst, so dass das Stabtraggerüst in Verbindung mit dem Stabtragwerk mit den Auftriebskörpern ein Stabraumtragwerk mit Auftriebskörpern ist. Die Kräfte werden dabei vorteilhafterweise über durchgängige Stabverbindungen zu den ersten Auftriebskörpern abgeleitet.

Die Wasseroberfläche überragende und damit diese durchschneidende Tragkörper sind Bestandteile des Traggerüsts. Die Wellenangriffsfläche wird damit minimiert, so dass die Positionsgenauigkeit des Schwimmtragwerks und damit die der Windkraftanlage oder der Service- oder der Konverterstation verbessert wird.

Der Tragkörper weist wenigstens eine gegen Eis brechende und abweisende Kante auf. Die Kante kann durch einen plattenförmigen Körper oder durch winklig zueinander angeordnete plattenförmige Körper am Tragkörper ausgebildet sein. Darüber hinaus können auch wenigstens bereichsweise sternförmig angeordnete plattenförmige Körper am Tragkörper dafür angeordnet sein. Der Tragkörper kann aber auch einen konisch ausgebildeten Körper aufweisen, der den Tragkörper ummantelt.

In einer Ausführungsform ist der Tragkörper selbst wenigstens bereichsweise konisch ausgebildet.

Die Anker gewährleisten in Zusammenwirkung mit den Abspannmitteln eine sichere und feste Positionierung des Tragwerks am Standort.

Vorteilhafte Ausgestaltungen der Erfindung sind in den Patentansprüchen 2 bis 7 angegeben.

Bevorzugt sind die zweiten Auftriebskörper in den Eckpunkten eines Polygons angeordnet. Weiterhin bevorzugt weisen die Polygone der ersten Auftriebskörper und der zweiten Auftriebskörper die gleiche Form auf, wobei sich jeweils ein erster Auftriebskörper zwischen zwei zweiten Auftriebskörpern befindet und die ersten Auftriebskörper Bestandteile des Kerntragwerks sind.

Die Größe der Grundfläche des Unterwassertragwerks wird im Wesentlichen durch die ersten Auftriebskörper bestimmt. Bei mehr als drei ersten Auftriebskörpern ist das durch den Abstand diagonal gegenüberliegenden ersten Auftriebskörpern gegeben.

Vorzugsweise sind die Anker korrespondierend zu den Auftriebskörpern angeordnet, wobei
- Auftriebskörper und Anker über jeweils ein erstes vertikal orientiertes Abspannmittel miteinander verbunden sind sowie
- mindestens zwischen einem Auftriebskörper und einem Anker wenigstens ein zweites schräg orientiertes Abspannmittel vorhanden ist.

Das schräg orientierte Abspannmittel ist dabei geneigt angeordnet. Dieses letztere zweite Abspannmittel sichert das Schwimmtragwerk insbesondere gegen Verdrehen. Eine mögliche Verschiebung kann reduziert werden.

Der Tragkörper ist vorteilhaft gleichzeitig als Bootsanleger ausgebildet. Im Zusammenhang mit Laufstegen, Treppen/Leitern und Bühnen wird die Begehbarkeit des Tragkörpers sichergestellt. Im einfachsten Fall besitzt der Tragkörper dafür einen kaiartig angeordneten Laufsteg mit Haltemitteln für wenigstens ein Boot.

Günstigerweise sind die ersten und die zweiten Auftriebskörper in einer Ebene angeordnet.

Die ersten und die zweiten Auftriebskörper sind dabei bevorzugt jeweils in den Eckpunkten eines Dreiecks oder eines Vierecks angeordnet, so dass sich jeweils ein erster Auftriebskörper zwischen zwei zweiten Auftriebskörpern befindet. In Verbindung mit den Auslegern ergibt sich eine drei- oder viereckförmige Grundfläche des Unterwassertragwerks.

Die Auftriebskörper weisen vorzugsweise wenigstens einen Hohlraum auf. Zur Positionierung als Unterwassertragwerk ist der Hohlraum ein sowohl mit Meerwasser flutbarer als auch mit einem gasförmigen Medium befüllbarer Hohlraum im Auftriebskörper ist. Zum Absenken des Unterwassertragwerks werden die Hohlräume der Auftriebskörper einfach geflutet, so dass das Unterwassertragwerk in Richtung Meeresboden absinkt. Nach Verbindung des Unterwassertragwerks mit den Ankern auf oder im Meeresboden wird gasförmiges Medium in die Hohlräume gedrückt, wobei gleichzeitig das darin enthaltene Meerwasser über ein Ventil nach außen gelangt. Dadurch erfolgt der Auftrieb des Unterwassertragwerks. Das Unterwassertragwerk wird mittels der Anker und der Abspannmittel unter Wasser gehalten.

Ein Ausführungsbeispiel der Erfindung ist in den Zeichnungen jeweils prinzipiell dargestellt und wird im Folgenden näher beschrieben.

Es zeigen:
- Fig. 1: ein in der offenen See schwimmendes und über Abspannmittel mit Ankern verbundenes Tragwerk mit einer Windkraftanlage in einer Vorderansicht,
- Fig. 2: ein Tragwerk in einer Vorderansicht,
- Fig. 3: ein Tragwerk in einer Draufsicht,
- Fig. 4: ein Tragwerk in einer Perspektivansicht und
- Fig. 5: ein Tragwerk mit geschnittenen Auftriebskörpern.

Ein in der offenen See schwimmendes und über Abspannmittel 5 mit Ankern 4 verbundenes Tragwerk für Windkraftanlagen 3, Servicestationen oder Konverterstationen besteht im Wesentlichen aus einem Unterwassertragwerk 1 und einem Traggerüst 2.

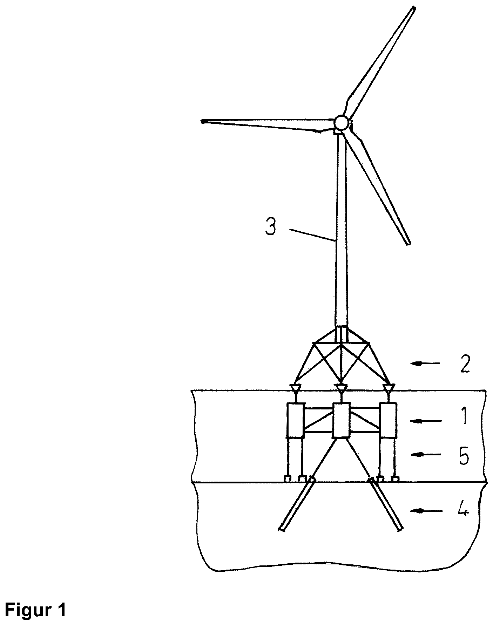

Dazu zeigen
- die Fig. 1: ein in der offenen See schwimmendes und über Abspannmittel mit Ankern verbundenes Tragwerk mit einer Windkraftanlage in einer prinzipiellen Vorderansicht,

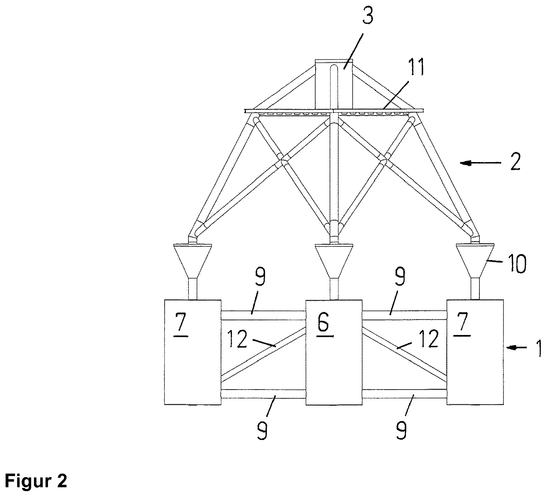

- die Fig. 2: ein Tragwerk in einer prinzipiellen Vorderansicht,

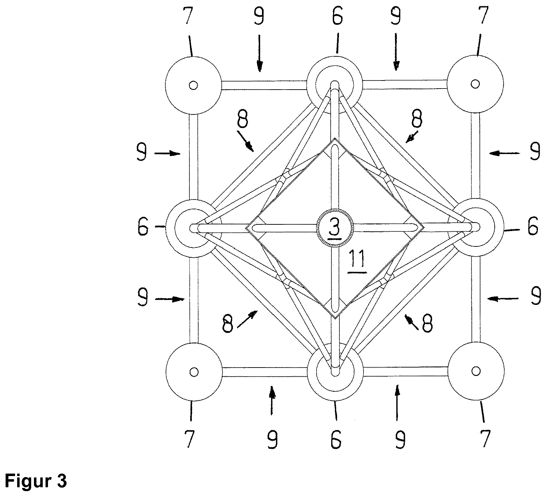

- die Fig. 3: ein Tragwerk in einer prinzipiellen Draufsicht und

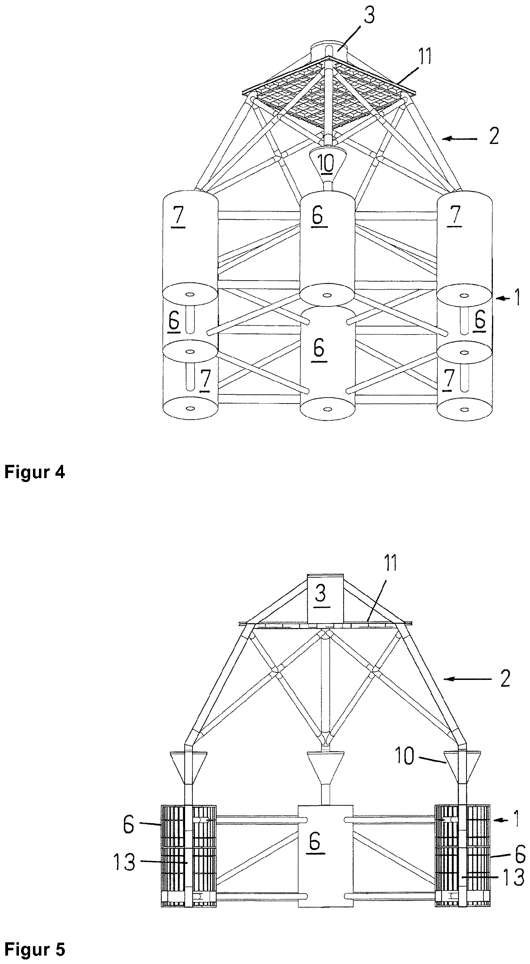

- die Fig. 4: ein Tragwerk in einer prinzipiellen Perspektivansicht.

Das Unterwassertragwerk 1 besteht dazu im Wesentlichen aus ersten Auftriebskörpern 6 und zweiten Auftriebskörpern 7, die über erste Abstandskörper 8 und zweite Abstandskörper 9 miteinander verbunden sind.

Zur Verbindung der ersten Auftriebskörper 6 untereinander und zur Verbindung der ersten Auftriebskörper 6 mit den zweiten Auftriebskörpern 7 sind jeweils zwei stabförmige Abstandskörper 8, 9 als erste und zweite Abstandskörper 8, 9 beabstandet zueinander angeordnet. Diese sind weiterhin über eine Strebe 12 miteinander verbunden. Die stabförmigen Abstandskörper 8, 9 und die Streben 12 sind Rohre insbesondere aus Metall oder einem Verbundwerkstoff. Vier erste Auftriebskörper 6 sind an den Eckpunkten eines Vierecks als ein Polygon angeordnet und über jeweils zwei stabförmige Abstandskörper 8 als erste Abstandkörper 8 miteinander verbunden.

Vier zweite Auftriebskörper 7 sind als Ausleger der ersten Auftriebskörper 6 angeordnet, wobei jeder der zweiten Auftriebskörper 7 mit jeweils seinen beiden benachbarten ersten Auftriebskörpern 6 über die zweiten stabförmigen Abstandskörper 9 verbunden ist. Die zweiten Auftriebskörper 7 sind in den Eckpunkten eines Vierecks als ein Polygon angeordnet, wobei sich jeweils ein erster Auftriebskörper 6 zwischen zwei zweiten Auftriebskörpern 7 befindet. Insgesamt begrenzen die ersten Auftriebskörper 6, die zweiten Auftriebskörper 7 und die Abstandskörper 9 ein Viereck mit den zweiten Auftriebskörpern 7 in den Eckpunkten und jeweils einem ersten Auftriebskörper 6 zwischen zwei zweiten Auftriebskörpern (Darstellung in der Fig. 2). Die ersten Auftriebskörper 6 und die zweiten Auftriebskörper 7 sind in einer Ebene angeordnet (Darstellung in der Fig. 1).

Die Fig. 5 zeigt ein Tragwerk mit geschnittenen Auftriebskörpern 6, 7 in einer prinzipiellen Darstellung.

Die Endenbereiche der stabförmigen Abstandskörper 8, 9 befinden sich im Auftriebskörper 6, 7. Wenigstens der jeweils gegenüber dem Meeresboden untere stabförmige Abstandkörper 8, 9 durchdringt den durch den Auftriebskörper 6, 7 begrenzten Hohlraum vollständig. Die stabförmigen Abstandskörper 8, 9 sind weiterhin über wenigstens einen Tragstab 13 im Auftriebskörper 6, 7 miteinander verbunden, so dass das Unterwassertragwerk 1 ein Stabtragwerk mit den Auftriebskörpern 6, 7 ist.

Die Knotenpunkte sowohl zwischen stabförmigen Abstandskörper 8, 9 und Tragstab 13 als auch zwischen stabförmigen Abstandskörpern 8, 9 und Strebe 12 befinden sich im Auftriebskörper 6, 7 (Darstellung in der Fig. 4).

Die Auftriebskörper 6, 7 weisen wenigstens einen Hohlraum auf. Dieser Hohlraum ist zur Positionierung als Unterwassertragwerk ein sowohl mit Meerwasser flutbarer als auch mit einem gasförmigen Medium befüllbarer Hohlraum im Auftriebskörper 6, 7.

Die ersten Auftriebskörper 6 sind gleichzeitig die Träger für das Traggerüst 2 für die Windkraftanlage 3. Dabei sind die Wasseroberfläche überragende und damit diese durchschneidende Tragkörper 10 Bestandteile des Traggerüsts 2. Der Tragkörper 10 weist wenigstens eine gegen Eis brechende und abweisende Kante auf oder ist wenigstens bereichsweise konisch ausgebildet. Darüber hinaus fungiert wenigstens ein Tragkörper 10 gleichzeitig als Bootsanleger.

Das Traggerüst 2 selbst ist als ein Stabtraggerüst 2 ausgebildet, so dass das Stabtraggerüst 2 in Verbindung mit dem Stabtragwerk mit den Auftriebskörpern 6, 7 ein Stabraumtragwerk mit Auftriebskörpern 6, 7 ist.

Das Traggerüst 2 besitzt eine Plattform 11 für die Windkraftanlage 3 oder entweder eine Service- oder eine Konverterstation ausbildende Bauwerke und/oder Gegenstände.

Der Turm der Windkraftanlage 3 und das Unterwassertragwerk 1 sind so angeordnet, dass die Mittel-/Symmetrieachsen des Turms und des Unterwassertragwerks 1 zusammenfallen und damit eine Mittel-/Symmetrieachse sind. Das trifft auch für das Kerntragwerk mit den ersten Auftriebskörpern 6 zu.

Die Anker 4 für das Unterwassertragwerk 1 sind korrespondierend zu den Auftriebskörpern 6, 7 angeordnet. Die Auftriebskörper 6, 7 und die Anker 4 sind über jeweils ein erstes vertikal orientiertes Abspannmittel 5 miteinander verbunden. Weiterhin ist mindestens zwischen einem Auftriebskörper 6, 7 und einem Anker 4 ein zweites schräg orientiertes Abspannmittel 5 vorhanden.

## Patentansprüche

1. In der offenen See schwimmendes und über Abspannmittel (5) mit Ankern (4) verbundenes Tragwerk für Windkraftanlagen (3), Servicestationen oder Konverterstationen mit
- einem Unterwassertragwerk (1) mit ersten an den Eckpunkten eines Polygons angeordneten und über jeweils wenigstens einen ersten Abstandskörper (8) miteinander verbundenen sowie als Träger für ein Traggerüst (2) dienenden Auftriebskörpern (6) als Kerntragwerk und zweiten als Ausleger der ersten Auftriebskörper (6) angeordneten Auftriebskörpern (7), wobei jeder der zweiten Auftriebskörper (7) mit seinen beiden benachbarten ersten Auftriebskörpern (6) über wenigstens einen zweiten Abstandskörper (9) verbunden ist, und
- dem Traggerüst (2) für die Windkraftanlage (3), die Servicestation oder die Konverterstation, **dadurch gekennzeichnet,**
- **dass** zur Verbindung der ersten Auftriebskörper (6) untereinander und zur Verbindung der ersten Auftriebskörper (6) mit den zweiten Auftriebskörpern (7) jeweils mindestens zwei stabförmige Abstandskörper (8, 9) beabstandet zueinander angeordnet sind,
- **dass** die beiden beabstandet zueinander angeordneten stabförmigen Abstandskörper (8, 9) über wenigstens eine Strebe (12) miteinander verbunden sind,
- **dass** sich die Endenbereiche der stabförmigen Abstandskörper (8, 9) im Auftriebskörper (6, 7) befinden,
- **dass** die stabförmigen Abstandskörper (8, 9) über einen Tragstab (13) im Auftriebskörper (6, 7) miteinander verbunden sind, so dass das Unterwassertragwerk (1) ein Stabtragwerk mit den Auftriebskörpern (6, 7) ist und sich die Knotenpunkte sowohl zwischen stabförmigen Abstandskörper (8, 9) und Tragstab (13) als auch zwischen stabförmigen Abstandskörpern (8, 9) und Strebe (12) im Auftriebskörper (6, 7) befinden,
- **dass** das Traggerüst (2) ein Stabtraggerüst (2) ist, so dass das Stabtraggerüst (2) in Verbindung mit dem Stabtragwerk mit den Auftriebskörpern (6, 7) ein Stabraumtragwerk mit Auftriebskörpern (6, 7) ist,
- **dass** die Wasseroberfläche überragende und damit diese durchschneidende Tragkörper (10) Bestandteile des Traggerüsts (2) sind und
- **dass** der Tragkörper (10) wenigstens eine gegen Eis brechende und abweisende Kante oder einen Konus aufweist oder wenigstens bereichsweise konisch ausgebildet ist.

2. Tragwerk nach Patentanspruch 1, **dadurch gekennzeichnet, dass** die zweiten Auftriebskörper (7) in den Eckpunkten eines Polygons angeordnet sind und dass die Polygone der ersten Auftriebskörper (6) und der zweiten Auftriebskörper (7) die gleiche Form aufweisen, wobei sich jeweils ein erster Auftriebskörper (6) zwischen zwei zweiten Auftriebskörpern (7) befindet und die ersten Auftriebskörper (6) Bestandteile des Kerntragwerks sind.

3. Tragwerk nach Patentanspruch 1 oder 2, **dadurch gekennzeichnet, dass** Anker (4) korrespondierend zu Auftriebskörpern (6, 7) angeordnete Anker (4) sind, wobei Auftriebskörper (6, 7) und Anker (4) über jeweils ein erstes vertikal orientiertes Abspannmittel (5) miteinander verbunden sind sowie mindestens zwischen einem Auftriebskörper (6, 7) und einem Anker (4) wenigstens ein zweites schräg orientiertes Abspannmittel (5) vorhanden ist.

4. Tragwerk nach Patentanspruch 1, **dadurch gekennzeichnet, dass** der Tragkörper (10) gleichzeitig als Bootsanleger ausgebildet ist.

5. Tragwerk nach Patentanspruch 1, **dadurch gekennzeichnet, dass** die ersten Auftriebskörper (6) und die zweiten Auftriebskörper (7) in einer Ebene angeordnet sind.

6. Tragwerk nach Patentanspruch 5, **dadurch gekennzeichnet, dass** die ersten Auftriebskörper (6) und die zweiten Auftriebskörper (7) jeweils in den Eckpunkten eines Dreiecks oder eines Vierecks angeordnet sind, so dass sich jeweils ein erster Auftriebskörper (6) zwischen zwei zweiten Auftriebskörpern (7) befindet.

7. Tragwerk nach Patentanspruch 1, **dadurch gekennzeichnet, dass** der Auftriebskörper (6, 7) wenigstens einen Hohlraum aufweist und dass der Hohlraum zur Positionierung als Unterwassertragwerk (1) ein sowohl mit Meerwasser flutbarer als auch mit einem gasförmigen Medium befüllbarer Hohlraum im Auftriebskörper (6, 7) ist.

## Claims

1. A load-bearing structure that floats in the open sea and is connected to anchors (4) via tension means (5), for wind power plants (3), service stations or converter stations, with
- an underwater load-bearing structure (1) with, as core load-bearing structure, first buoyancy bodies (6) that are arranged at the corners of a polygon and are connected to one another via in each case at least one first spacer body (8) and act as supports for a load-bearing frame (2), and with second buoyancy bodies (7) that are arranged as outriggers of the first buoyancy bodies (6), wherein each of the second buoyancy bodies (7) is connected to its two adjacent first buoyancy bodies (6) via at least one second spacer body (9), and
- the load-bearing frame (2) for the wind power plant (3), the service station or the converter station, **characterized in**
- **that** for connecting the first buoyancy bodies (6) to one another and for connecting the first buoyancy bodies (6) to the second buoyancy bodies (7), in each case at least two rod-shaped spacer bodies (8, 9) are arranged spaced apart from one another,
- **that** the two rod-shaped spacer bodies (8, 9) that are arranged spaced apart from one another are connected to one another via at least one strut (12),
- **that** the end regions of the rod-shaped spacer bodies (8, 9) are located within the buoyancy body (6, 7),
- **that** the rod-shaped spacer bodies (8, 9) are connected to one another via a supporting rod (13) in the buoyancy body (6, 7) so that the underwater load-bearing structure (1) is a load-bearing rod structure with the buoyancy bodies (6, 7), and the nodal points are located between rod-shaped spacer bodies (8, 9) and the supporting rod (13) as well as between rod-shaped spacer bodies (8, 9) and the strut (12) in the buoyancy body (6, 7),
- **that** the load-bearing frame (2) is a load-bearing rod frame (2) so that the load-bearing rod frame (2) in connection with the load-bearing rod structure with the buoyancy bodies (6, 7) is a three-dimensional load-bearing rod structure with buoyancy bodies (6, 7),
- **that** the load-bearing bodies (10) protruding above and thus cutting through the water surface are components of the load-bearing frame (2), and
- **that** the load-bearing body (10) has at least one ice-breaking and repelling edge or a cone or is formed conically at least in certain sections.

2. The load-bearing structure according to patent claim 1, **characterized in that** the second buoyancy bodies (7) are arranged in the corner points of a polygon and that the polygons of the first buoyancy bodies (6) and the second buoyancy bodies (7) have the same shape, wherein in each case a first buoyancy (6) is located between two second buoyancy bodies (7), and the first buoyancy bodies (6) are components of the core load-bearing structure.

3. The load-bearing structure according to patent claim 1 or 2, **characterized in that** anchors (4) are anchors (4) arranged corresponding to buoyancy bodies (6, 7), wherein buoyancy bodies (6, 7) and anchors (4) are in each case connected to one another via a first vertically oriented tension means (5) and wherein at least between an buoyancy body (6, 7) and an anchor (4) there is at least one second obliquely oriented tension means (5).

4. The load-bearing structure according to patent claim 1, **characterized in that** the load-bearing body (10) is designed at the same time as a jetty.

5. The load-bearing structure according to patent claim 1, **characterized in that** the first buoyancy bodies (6) and the second buoyancy bodies (7) are arranged in one plane.

6. The load-bearing structure according to patent claim 5, **characterized in that** the first buoyancy bodies (6) and the second buoyancy bodies (7) are in each case arranged in the corner points of a triangle or a square so that in each case one first buoyancy body (6) is located between two second buoyancy bodies (7).

7. The load-bearing structure according to patent claim 1, **characterized in that** the buoyancy body (6, 7) has at least one hollow space and that the hollow space is a hollow space in the buoyancy body (6, 7) that can be flooded with sea water and also filled with a gaseous medium for positioning as an underwater load-bearing structure (1).

## Revendications

1. Structure porteuse flottant en pleine mer et reliée avec des ancres (4) par l'intermédiaire de moyens de haubanage (5) pour des centrales électriques éoliennes (3), des stations service ou des postes de convertisseur, avec
- une structure porteuse (1) sous-marine avec des premiers flotteurs (6) placés sur les points angulaires d'un polygone et reliés les uns aux autres par l'intermédiaire de chaque fois au moins un premier écarteur (8), ainsi que faisant office de supports pour une ossature porteuse (2) en tant que structure porteuse centrale et des deuxièmes flotteurs (7) placés en tant qu'avant-bras des premiers flotteurs (6), chacune des deuxièmes flotteurs (7) étant relié avec ses deux premiers flotteurs (6) voisins par l'intermédiaire d'au moins un deuxième écarteur (9) et
- l'ossature porteuse (2) pour la centrale électrique éolienne (3), la station service ou le poste de convertisseur, **caractérisé**
- **en ce que** pour relier les premiers flotteurs (6) entre eux et pour relier les premiers flotteurs (6) avec les deuxièmes flotteurs (7), chaque fois au moins deux écarteurs (8, 9) en forme de poutrelles sont placés avec un écart mutuel,
- **en ce que** les deux écarteurs (8, 9) en forme de poutrelles, placés avec un écart mutuel sont reliés l'un à l'autre par l'intermédiaire d'au moins une jambe de force (12),
- **en ce que** les zones d'extrémité des écarteurs (8, 9) en forme de poutrelles se trouvent dans les flotteurs (6, 7),
- **en ce que** les écarteurs (8, 9) en forme de poutrelles sont reliés l'un à l'autre dans le flotteur (6, 7) par l'intermédiaire d'une poutrelle porteuse (13), de telle sorte que la structure porteuse (1) sous-marine avec les flotteurs (6, 7) soit une structure porteuse en poutrelles et que les points de jonction se trouvent aussi bien entre des écarteurs (8, 9) en forme de poutrelles et la poutrelle porteuse (13) qu'également entre des écarteurs (8, 9) en forme de poutrelles et la jambe de force (12) dans le flotteur (6, 7),
- **en ce que** l'ossature porteuse (2) est une ossature porteuse (2) en poutrelles, de telle sorte que l'ossature porteuse (2) en poutrelles, en liaison avec la structure porteuse en poutrelles avec les flotteurs (6, 7) soit une structure porteuse en poutrelles à trois dimensions avec des flotteurs (6, 7),
- **en ce que** des corps porteurs (10) saillant pardessus la surface de l'eau et recoupant donc celle-ci sont des composants de l'ossature porteuse (2) et
- **en ce que** le corps porteur (10) comporte au moins une arête brisant la glace ou une cône ou est conçu de forme conique au moins par zones.

2. Structure porteuse selon la revendication 1 **caractérisé en ce que** les deuxièmes flotteurs (7) sont placés dans les points angulaires d'un polygone et **en ce que** les polygones des premiers flotteurs (6) et des deuxièmes flotteurs (7) présentent la même forme, chaque fois un premier flotteur (6) se trouvant entre deux deuxièmes flotteurs (7) et les premiers flotteurs (6) étant des composants de la structure porteuse centrale.

3. Structure porteuse selon la revendication 1 ou 2, **caractérisée en ce que** les ancres (4) sont des ancres (4) placées en correspondance avec des flotteurs (6, 7), les flotteurs (6, 7) et les ancres (4) étant reliés ensemble par l'intermédiaire de chaque fois un premier moyen de haubanage (5) orienté à la verticale et entre au moins un flotteur (6, 7) et une ancre (4) étant présent au moins un deuxième moyen de haubanage (5) orienté à la diagonale.

4. Structure porteuse selon la revendication 1, **caractérisée en ce que** le corps porteur (10) est conçu simultanément en tant que ponton.

5. Structure porteuse selon la revendication 1, **caractérisée en ce que** les premiers flotteurs (6) et les deuxièmes flotteurs (7) sont placés dans un plan.

6. Structure porteuse selon la revendication 5, **caractérisée en ce que** les premiers flotteurs (6) et les deuxièmes flotteurs (7) sont placés chacun dans les points angulaires d'un triangle ou d'un carré, de sorte que chaque fois un premier flotteur (6) se trouve entre deux deuxièmes flotteurs (7).

7. Structure porteuse selon la revendication 1, **caractérisée en ce que** le flotteur (6, 7) comporte au moins une cavité et **en ce que** pour le positionnement en tant que structure porteuse (1) sous-marine, la cavité est une cavité dans le flotteur (6, 7), pouvant être aussi bien remplie d'eau de mer que remplie d'un milieu gazeux.
